**Europäisches Patentamt**

**European Patent Office**

**Office européen des brevets**

(19)

(11) Numéro de publication : **0 409 722 B1**

(12)

# FASCICULE DE BREVET EUROPEEN

(45) Date de publication du fascicule du brevet :
**02.12.92 Bulletin 92/49**

(51) Int. Cl.⁵ : **F16B 39/32**

(21) Numéro de dépôt : **90402057.5**

(22) Date de dépôt : **17.07.90**

(54) **Perfectionnements aux dispositifs pour fixer un élément sur un support perforé accessible d'un seul côté.**

(30) Priorité : **20.07.89 FR 8909783**

(43) Date de publication de la demande :
**23.01.91 Bulletin 91/04**

(45) Mention de la délivrance du brevet :
**02.12.92 Bulletin 92/49**

(84) Etats contractants désignés :
**DE ES IT**

(56) Documents cités :
**DE-A- 3 427 640**
**FR-A- 440 728**
**US-A- 1 467 907**
**US-A- 1 942 259**
**US-A- 3 722 037**

(73) Titulaire : **COMPAGNIE DE MATERIEL ET D'EQUIPEMENTS TECHNIQUES C.O.M.E.T. 27, Avenue Etienne Audibert F-60304 Senlis Cedex (FR)**

(72) Inventeur : **Bouery, Roger 18, rue Damrémont F-75018 Paris (FR)**
Inventeur : **Moryl, Richard 10, avenue Eugénie F-95600 Eaubonne (FR)**

(74) Mandataire : **Behaghel, Pierre et al CABINET PLASSERAUD 84 rue d'Amsterdam F-75009 Paris (FR)**

EP 0 409 722 B1

## Description

L'invention est relative aux dispositifs pour fixer un élément sur un support perforé accessible d'un seul côté et notamment sur une tôle faisant partie d'un caisson fermé au moins en partie, comme il arrive fréquemment dans les carrosseries de véhicules.

Elle vise plus particulièrement, parmi ces dispositifs de fixation, ceux qui comprennent :

- d'une part, une tige terminée à une extrémité par un pied destiné à être introduit dans deux trous alignés pratiqués respectivement dans le support et dans l'élément à fixer, ce pied étant agencé de façon à s'épanouir transversalement juste après sa traversée des deux trous et à prendre ensuite appui sur le support lors de l'exercice sur la tige d'une traction en sens inverse de l'introduction ci-dessus,

- et d'autre part, une tête susceptible d'être assujettie sur l'extrémité, de la tige, opposée à son pied, en prenant appui sur l'élément à fixer de façon telle que cet élément soit serré contre le support, entre la tête et le pied.

Des dispositifs de ce genre ont par exemple été décrits dans le DE-A-3 427 640.

Dans ces dispositifs, la tête est une bague crantée entourant la tige, déplaçable axialement le long de cette tige et propre à coopérer avec une suite rectiligne de crans prévus sur ladite tige.

Une telle formule donne souvent satisfaction.

Mais pour éviter un démontage trop facile du dispositif, en particulier lorsque celui-ci est constitué en une matière plastique, comme généralement préféré, il est nécessaire de procéder à une opération complémentaire pour fixer définitivement la tête sur la tige en la position de serrage des différents composants mutuellement juxtaposés de l'ensemble, cette opération étant effectuée par soudage à chaud par ultrasons.

Cette opération est relativement fastidieuse et coûteuse.

De plus, elle est délicate à conduire car il est difficile de maintenir le serrage mutuel des pièces juxtaposées lors du soudage.

L'invention a pour but, surtout, de supprimer ces inconvénients.

A cet effet, les dispositifs de fixation du genre en question selon l'invention sont essentiellement caractérisés en ce que leur tige est délimitée extérieurement par une surface cylindrique filetée évidée par des rainures longitudinales présentant un profil à rampe oblique et portée radiale, en ce que leur tête est constituée par un écrou propre à coopérer par vissage avec le filetage de la tige, écrou prolongé axialement par une jupe sur la face interne de laquelle font saillie des crans propres à coopérer avec les rainures de la tige aux fins de verrouillage angulaire de l'écrou sur cette tige et en ce que l'extrémité de la tige opposée au pied est encochée de façon à pouvoir être bloquée angulairement par un tournevis ou outil analogue.

Dans des modes de réalisation préférés, on a recours en outre à l'une et/ou à l'autre des dispositions suivantes :

- la tige est évidée axialement de façon à former un manchon cylindrique ouvert axialement du côté de son extrémité encochée,

- les encoches évidées dans la tranche terminale du manchon comprennent chacune un bord longitudinal et un bord oblique,

- le nombre des rainures est égal à quatre et celui des crans est égal à cinq.

L'invention comprend, mises à part ces dispositions principales, certaines autres dispositions qui s'utilisent de préférence en même temps et dont il sera plus explicitement question ci-après.

Dans ce qui suit, l'on va décrire un mode de réalisation préféré de l'invention en se référant aux dessins ci-annexés d'une manière bien entendu non limitative.

Les figures 1 et 2, de ce dessin, montrent respectivement en vue latérale, portion coupée axialement selon I-I, fig. 2, un dispositif de fixation établi selon l'invention.

Les figures 3 et 4 montrent respectivement selon une vue latérale perpendiculaire à celle de la fig. 1 et en coupe transversale selon IV-IV fig. 3, la tige comprise par le dispositif de fixation ci-dessus.

La figure 5 montre en vue en bout la tête du même dispositif.

Le dispositif de fixation considéré est composé de deux pièces constituées en une matière plastique moulée, savoir, d'une part, une tige 1 terminée par un pied 2 et, d'autre part, une tête 3.

Le pied 2 comprend lui-même un embout terminal 4 de forme pointue raccordé au reste de la tige 1 par une âme plus mince 5.

Deux pattes 6 sont reliées à l'âme 5 par des pontets flexibles 7 et présentent des talons 8 complémentaires d'alvéoles 9 évidés dans l'embout 4.

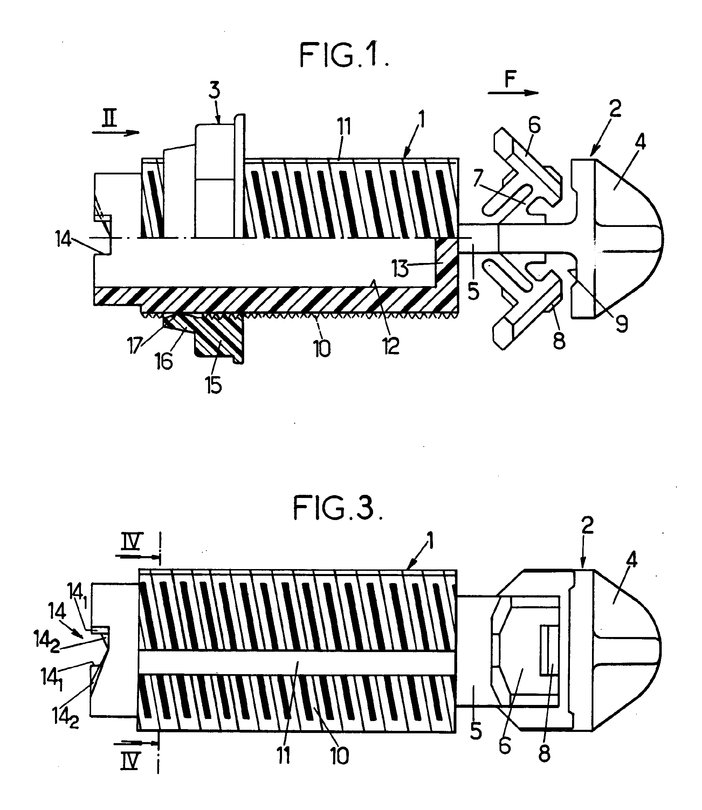

En leur position libre, les pattes 6 occupent leur position représentée sur la figure 1, inclinée sur la direction longitudinale de la tige 1.

Le dimensionnement de ces pattes 6 et leur montage sont tels :

- que, lors de l'introduction du pied 2 selon la flèche F dans un trou complémentaire (non représenté) évidé dans une tôle de support, elles sont automatiquement escamotées vers l'axe du dispositif par flexion des pontets 7,

- que, juste après leur traversée dudit trou, elles se déploient élastiquement,

- et que, lors de l'exercice ultérieur sur la tige 1 d'une traction orientée dans le sens inverse de la flèche F, l'application de ces pattes contre les bords du trou traversé ait pour effet d'orienter transversalement lesdites pattes, en logeant leurs talons 8 dans les alvéoles 9, ce qui verrouille axialement le dispositif en interdisant son extraction hors du trou dans ledit sens inverse de la flèche F.

Pour ce qui est de la tige 1, on la délimite ici extérieurement par une surface cylindrique filetée 10 évidée par des rainures longitudinales 11.

Pour réduire le volume de la matière, on évide axialement un trou 12 dans le corps constitutif de la tige 1, lequel corps forme ainsi un manchon cylindrique.

Ce manchon présente à l'une de ses extrémités axiales un fond 13 prolongé par l'âme 5 ci-dessus et il est ouvert à son autre extrémité axiale.

Des encoches 14 sont évidées axialement dans le bord de son ouverture pour permettre son blocage angulaire à l'aide d'un tournevis ou outil analogue. Le profil de ces encoches, comprenant un bord longitudinal $14_1$ et un bord oblique $14_2$, facilite la mise en place dudit outil.

Enfin, pour ce qui est de la tête 3, on la constitue par un écrou 15 propre à coopérer par vissage avec la surface filetée 10 de la tige 1, écrou prolongé axialement par une jupe 16.

Sur la face cylindrique interne de cette jupe 16 fait saillie radialement au moins un cran 17 propre à coagir avec les rainures 11 aux fins de blocage angulaire de la tête 3 sur la tige 1.

Les profils, nombres et emplacements des rainures 11 et/ou ceux des crans 17 sont prévus de façon telle que, d'une part, le blocage angulaire de la tête sur la tige soit irréversible et que, d'autre part, ce blocage puisse être obtenu pour une pluralité de positions angulaires relatives rapprochées de la tête par rapport à la tige.

Pour obtenir le premier de ces avantages, les surfaces délimitant les rainures 11 et les crans 17 comprennent :

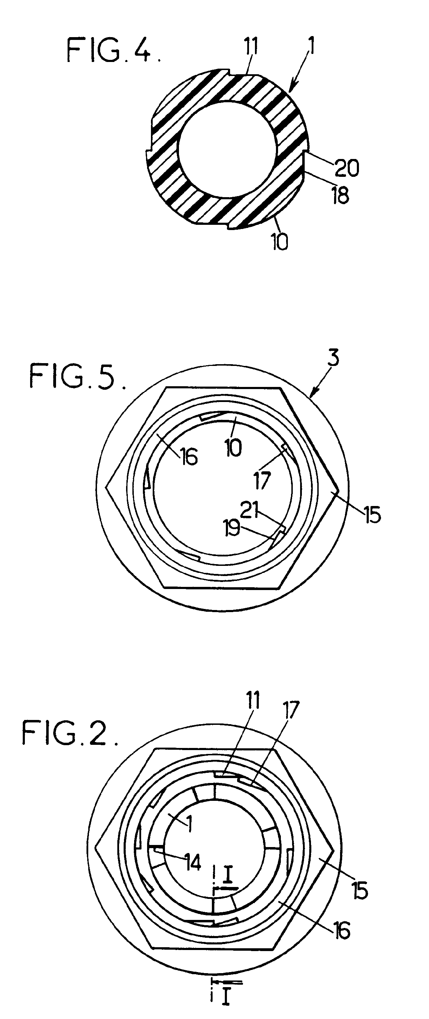

- une rampe plane (18, fig. 4 ; 19, fig. 5) inclinée par rapport à la surface cylindrique correspondante (respectivement surface filetée 10 ; surface interne de la jupe 16), rampe dont une extrémité angulaire se trouve sur ladite surface,

- et une portée plane radiale (20 ; 21) raccordant à ladite surface l'autre extrémité angulaire de ladite rampe (18 ; 19).

Ces profils à rampe oblique et portée radiale sont orientés de façon telle :

- que d'une part ils permettent un vissage de l'écrou sur la tige filetée, avec glissement angulaire des différents crans de l'écrou contre la surface filetée de la tige, y compris le franchissement de ses rainures, grâce à la présence des rampes,

- et que, d'autre part, ils interdisent tout dévissage en deçà d'une position angulaire correspondant à l'introduction d'un cran 17 dans une rainure 11, vu la butée angulaire mutuelle des deux portées radiales comprises respectivement par ces deux éléments.

Le second avantage est obtenu en prévoyant une pluralité de rainures 11 et une pluralité de crans 17, en répartissant régulièrement ces rainures et crans autour de l'axe du dispositif et en donnant des valeurs différentes au nombre des rainures et à celui des crans.

C'est ainsi que, si l'on appelle $r$ le nombre des rainures et $c$ le nombre des crans, l'écart angulaire entre deux positions de verrouillage irréversible successives est donné, en degrés, par la formule 360 (c-r)/cr.

Dans le mode de réalisation illustré pour lequel les nombres $r$ et $c$ sont respectivement égaux à 4 et 5, l'écart angulaire ci-dessus est égal à 18° seulement.

Il descendrait à 8 degrés et demi en donnant aux nombres r et c les valeurs 6 et 7.

En suite de quoi, et quel que soit le mode de réalisation adopté, on obtient finalement un dispositif de fixation dont la constitution résulte suffisamment de ce qui précède.

La mise en place d'un tel dispositif se comprend facilement.

On commence par placer l'élément que l'on désire fixer sur la tôle de support ou analogue en alignant respectivement les deux trous évidés dans chacune de ces deux pièces, on introduit le pied du dispositif dans l'ensemble de ces deux trous, puis on exerce sur la tige du dispositif une traction dès que son pied a traversé les deux trous, après quoi l'on visse au maximum la tête 3 sur la tige filetée 1 en bloquant angulairement cette tige à l'aide d'un outil approprié introduit dans ses encoches 14.

Le montage est alors terminé avec un serrage très efficace de l'élément contre son support, entre la tête et le pied du dispositif, et ce sans qu'il y ait eu besoin de recourir à aucune opération de soudage.

**Revendications**

1. Dispositif pour fixer un élément sur un support perforé accessible d'un seul côté, comprenant d'une part, une tige (1) terminée à une extrémité par un pied (2) destiné à être introduit dans deux trous alignés pratiqués respectivement dans le support et dans l'élément à fixer, ce pied étant agencé de façon à s'épanouir transversalement juste après sa traversée des deux trous et à prendre ensuite appui sur le support lors de l'exercice sur la tige d'une traction en sens inverse de l'introduction ci-dessus, et d'autre part, une tête (3) susceptible d'être assujettie sur l'extrémité, de la tige, opposée à son pied, en prenant appui sur l'élément à fixer de façon telle que cet élément soit serré contre le support, entre la tête et le pied, caractérisé en ce que sa tige (1) est délimitée extérieurement par une surface cylindrique filetée (10) évidée par des rainures longitudinales (11) présentant un profil à rampe oblique (18) et portée radiale (20), en ce que sa tête (3) est constituée par un écrou (15) propre à coopérer par vissage avec le filetage de la tige, écrou prolongé axialement par une jupe (16) sur la face interne de laquelle font saillie des crans (17) propres à coopérer avec les rainures de la tige aux fins de verrouillage angulaire de l'écrou sur cette tige et en ce que l'extrémité de la tige opposée au pied est encochée (en 14) de façon à pouvoir être bloquée angulairement par un tournevis ou outil analogue.

2. Dispositif de fixation selon la revendication 1, caractérisé en ce que la tige (1) est évidée axialement (en 12) de façon à former un manchon cylindrique ouvert axialement du côté de son extrémité encochée.

3. Dispositif de fixation selon la revendication 2, caractérisé en ce que les encoches (14) évidées dans la tranche terminale du manchon comprennent chacune un bord longitudinal (14$_1$) et un bord oblique (14$_2$).

4. Dispositif de fixation selon l'une quelconque des précédentes revendications, caractérisé en ce que le nombre des rainures (11) est égal à quatre et en ce que celui des crans (17) est égal à cinq.

**Patentansprüche**

1. Einrichtung zum Befestigen eines Gegenstandes an einem perforierten, nur von einer Seite zugänglichen Träger, umfassend einerseits einen Schaft (1), welcher an einem Ende in einen Fuß (2) ausläuft, der durch zwei zueinander ausgerichtete, einerseits im Träger und andererseits in dem zu befestigenden Gegenstand ausgebildete Löcher gesteckt wird, wobei der Fuß so ausgebldet ist, daß er sich unmittelbar nach dem Durchtritt durch die beiden Löcher quer aufspreizt und sich danach an den Träger anlegt, wenn auf den Schaft eine Zugkraft entgegen der Richtung des Einführens in denselben aufgebracht wird, und andererseits einen Kopf (3), welcher auf dem Endes des Schaftes, welches seinem Fuß abgewandt ist, befestigbar ist, wobei dieser sich gegen den zu befestigenden Gegenstand so anlegt, daß der Gegenstand zwischen dem Kopf und dem Fuß gegen den Träger gepreßt wird, dadurch **gekennzeichnet**,
   - daß der Schaft (1) außen von einer zylindrischen, mit einem Gewinde (10) versehenen Oberfläche begrenzt ist, die mit Längsnuten (11) versehen ist, welche ein durch eine schräge Rampe (18) und eine radiale Anlagefläche (20) gebildetes Profil haben,
   - daß der Kopf (3) aus einer Mutter (15) gebildet ist, die mit dem Gewinde des Schaftes über einen Schraubeingriff zusammenwirkt, wobei die Mutter axial durch eine Schürze (16) verlängert ist, an deren Innenfläche Rastelemente (17) vorstehen, welche mit den Nuten des Schaftes zwecks Verriegelung des Drehwinkels der Mutter auf dem Schaft zusammenwirken, und
   - daß das dem Fuß abgewandte Ende des Schaftes (bei 14) so eingekerbt ist, daß er mittels eines Schraubendrehers oder eines ähnlichen Werkzeuges in Drehrichtung blockiert werden kann.

2. Einrichtung zum Befestigen nach Anspruch 1, dadurch **gekennzeichnet**, daß der Schaft (1) eine axiale Bohrung (bei 12) aufweist derart, daß eine Zylinderhülse gebildet wird, die an der Seite des mit Einkerbungen versehenen Endes in axialer Richtung offen ist.

3. Einrichtung zum Befestigen nach Anspruch 2, dadurch **gekennzeichnet**, daß die Einkerbungen (14), welche im Endabschnitt der Hülse ausgebildet sind, jeweils eine Längskante (14$_1$) und eine Schrägkante (14$_2$) aufweisen.

4. Einrichtung zum Befestigen nach einem der vorangehenden Ansprüche, dadurch **gekennzeichnet**, daß die Anzahl der Nuten (11) gleich vier und daß die Anzahl der Rastelemente (17) gleich fünf ist.

**Claims**

1. Device for fixing an element to a drilled support accessible from only one side, comprising on the one hand a rod (1) terminating at one end in a foot (2) designed to be inserted into two holes in alignment made respectively in the support and in the element to be fixed, this foot being arranged so as to open out transversely just after it has passed through the two holes and then bear against the support when traction is exerted on the rod in the opposite direction to the above insertion, and on the other hand a head (3) able to be fixed to the end of the rod opposite to its foot, bearing on the element to be fixed so that this element is pressed against this support, between the head and foot, characterised in that the rod (1) is defined externally by a threaded cylindrical surface (10) with longitudinal grooves (11) having an obliquely sloping profile (18) and a radial bearing surface (20), in that its head (3) consists of a nut (15) suitable for interacting, by screwing, with the thread on the rod, nut extended axially by a skirt (16) on the internal face of which project catches (17) suitable for interacting with the grooves on the rod for the purpose of angular locking of the nut on this rod and in that the end of the rod opposite to the foot is recessed (at 14) so as to be able to be locked angularly by means of a screwdriver or similar tool.

2. Fixing device according to Claim 1, characterised in that the rod (1) is hollowed out axially (at 12) so as to form a cylindrical sleeve open axially at its recessed end.

3. Fixing device according to Claim 2, characterised in that the recesses (14) made in the end section of the sleeve each comprise a longitudinal edge ($14_1$) and an oblique edge ($14_2$).

4. Fixing device according to any one of the preceding claims, characterised in that the number of grooves (11) is equal to four and in that the number of catches (17) is equal to five.

EP 0 409 722 B1

# FIG.1.

# FIG.3.

EP 0 409 722 B1

FIG.4.

FIG.5.

FIG.2.